# EUROPEAN PATENT SPECIFICATION

(11) **EP 4 309 298 B1**
(45) Date of publication and mention of the grant of the patent: **12.02.2025**
(21) Application number: 21714420.3
(22) Date of filing: 19.03.2021
(51) Int. Cl.: H04B 7/0417, H04B 7/06, H04L 1/00

(54) **VISION-ASSISTED SAFE MODE HANDLING IN WIRELESS COMMUNICATION NETWORKS**
SICHTUNTERSTÜTZTE HANDHABUNG EINES SICHEREN MODUS IN DRAHTLOSEN KOMMUNIKATIONSNETZEN
GESTION DE MODE SÉCURISÉ ASSISTÉE PAR VISION DANS DES RÉSEAUX DE COMMUNICATION SANS FIL

(43) Date of publication of application: 24.01.2024
(73) Proprietor: Telefonaktiebolaget LM Ericsson (publ), 164 83 Stockholm (SE)
(72) Inventor: SOKUN, Hamza, K2T0P7 Ottawa, Ontario (CA)
(74) Representative: Ericsson
(86) International application number: PCT/IB2021/052337
(87) International publication number: WO 2022/195331

(56) References cited:
- US-A1- 2018 331 742
- LI YU-NGOK RUYUE ET AL: "Beam Management in Millimeter-Wave Communications for 5G and Beyond", IEEE ACCESS, IEEE, USA, vol. 8, 31 December 2019 (2019-12-31), pages 13282 - 13293, XP011767596, DOI: 10.1109/ACCESS.2019.2963514
- SHIMIZU TAKAYUKI ET AL: "Millimeter Wave V2X Communications: Use Cases and Design Considerations of Beam Management", 2018 ASIA-PACIFIC MICROWAVE CONFERENCE (APMC), IEICE, 6 November 2018 (2018-11-06), pages 183 - 185, XP033500215, DOI: 10.23919/APMC.2018.8617303
- YANG ZHICHENG ET AL: "Sensor-Assisted Codebook-Based Beamforming for Mobility Management in 60 GHz WLANs", 2015 IEEE 12TH INTERNATIONAL CONFERENCE ON MOBILE AD HOC AND SENSOR SYSTEMS, IEEE, 19 October 2015 (2015-10-19), pages 333 - 341, XP032845674, DOI: 10.1109/MASS.2015.58

## Description

### TECHNICAL FIELD

Wireless communication and in particular, handling of sensor-assisted modes of wireless communication.

### BACKGROUND

Wireless communication networks, such as those provided based on standards promulgated by the 3rd Generation Partnership Project (3GPP), e.g., Long Term Evolution (LTE) and New Radio (NR) (NR is also referred to as 5G), support at least a network node, more than one wireless device (WD), and communication signals associated with the network node and the WDs. Generally, these communication signals may include THz signals and mmWave signals which suffer from issues associated with high propagation loss and sensitivity to blockage. To overcome these issues, directional communications, such as beamforming, may be utilized at a transmitter and a receiver by establishing highly directional transmission links. To support directional communications, a set of procedures, known as beam management (BM), are defined in the 3GPP specifications for mmWave communication. The set of procedures typically include three operations: (1) P1, i.e., beam establishment; (2) P2, i.e., network node beam refinement and tracking; and (3) P3, i.e., WD beam refinement and tracking.

For P2, the network node, e.g., an NR network node (gNodeB), should request aperiodic Channel State Information (CSI) reporting by using Download Control Information (DCI), specifically, using a non-fallback DCI format 0_1. Receiving aperiodic CSI reporting successfully is critical for BM. However, sometimes CSI feedback reports are not successfully received due to Discontinuous Transmission (DTX) or Uplink Control Information (UCI) Cyclic Redundancy Code (CRC) NOK, i.e., the CRC has not passed. Typically, there are no retransmission for these failed CSI reports.

In some cases, the period of time without receiving CSI reports could be sufficiently long to result in loss of communication between the network node and the WD. In order to maintain the communication between the network node and the WD, the User Plane Control (UPC) needs to move to a transition state, known as safe mode, and to handle Uplink/Downlink (UL/DL) scheduling during this period of loss of communication. For instance, safe mode handling is required during Radio Resource Control (RRC) reconfiguration for dynamic UL waveform switching between Cyclic Prefix - Orthogonal Frequency Division Multiplexing (CP-OFDM) and Discrete Fourier Transform Spread - Orthogonal Frequency Division Multiplexing (DFTS-OFDM). More particularly, DFTS-OFDM only uses a single-layer, so that DFTS-OFDM should be configured with single-antenna port and single-layer. Waveform switching is performed via RRC reconfiguration due to the need for DCI 0_1 field reconfiguration, e.g., antenna ports, precoding information, number of layers.

Further, there is a period of time in which the WD is configured for single port, but the network node is not aware of this information until the network node receives an RRC Reconfiguration Complete message. In this period of time, DCI 0_1 used for aperiodic CSI report for BM cannot be utilized due to a mismatch in DCI 0_1 format size. Other formats, such as DCI 0_0 format, cannot be used for aperiodic CSI report request which are critical for both BM and link adaptation (LA). Accordingly, the network node does not have information about when the WD performs or completes reconfiguration. Also, the network node does not have information about how much time has elapsed from RRC Reconfiguration to the completion of RRC reconfiguration.

A straightforward option for the network node to handle UL/DL scheduling during safe mode is to suspend UL/DL scheduling at least during safe mode. However, suspension of UL/DL scheduling negatively impacts the WD, at least by impacting the WD throughputs. Suspending UL/DL for an unresponsive WD may be still necessary for the network node, e.g., when the safe mode is long, to accommodate or schedule other WDs using resources that are released as a result of the UL/DL suspension. This way, the overall throughput associated of all WDs serviced by the network node is affected in a way that may be tolerated. Suspension of UL/DL scheduling has a high risk of WD dropping among other drawbacks.

Although continuing UL/DL without aperiodic CSI reports may be an alternative, the unavailability of CSI reports during safe mode, e.g., in cases of certain prolonged periods of time and/or occurrence of beam loss, continuing UL/DL transmissions without aperiodic CSI reports could cause undesired results. Some of the undesired results may include radio link failure (RLF), e.g., triggered by the network node, Radio Link Control (RLC) delivery failure, expiration of a time indicated by a timer. In either case, suspending or continuing UL/DL, WD throughput is negatively affected.

Document US 2018/331742 discloses a method for reporting an aperiodic channel condition in a wireless communication system. The method is performed by a terminal. The method comprises the steps of: receiving, from a base station, setting for one or more channel state information, CSI, processes including a plurality of channel state information-reference signals, CSI-RS, resources, wherein preceding is applied to each of the plurality of CSI-RS resources; receiving an aperiodic CSI report request from the base station; and transmitting, to the base station, an aperiodic CSI for a CSI process indicated by the aperiodic CSI report request, wherein, if a certain time has not elapsed after a CSI-RS resource index for the CSI process indicated by the aperiodic CSI report request is reported, the transmitted aperiodic CSI may include a CSI-RS resource index for a CSI process which has not been updated.

LI YU-NGOK RUYUE ET AL: "Beam Management in Millimeter-Wave Communications for 5G and Beyond", IEEE ACCESS, IEEE, USA, vol. 8, 31 December 2019, pages 13282-13293 discloses an overview on beam management procedure according to the current 5G standardization progress.

SHIMIZU TAKAYUKI ET AL: "Millimeter Wave V2X Communications: Use Cases and Design Considerations of Beam Management", 2018 ASIA-PACIFIC MICROWAVE CONFERENCE (APMC), IEICE, 6 November 2018, pages 183-185 discusses how low-frequency communication (e.g., 5.9 GHz DSRC), onboard sensors mounted at vehicles and infrastructures, and DSRC messages (e.g., vehicle position, speed, acceleration, and path prediction) can be utilized to facilitate mm-wave V2X beam management.

YANG ZHICHENG ET AL: "Sensor-Assisted Codebook-Based Beamforming for Mobility Management in 60 GHz WLANs", 2015 IEEE 12TH INTERNATIONAL CONFERENCE ON MOBILE AD HOC AND SENSOR SYSTEMS, IEEE, 19 October 2015, pages 333-341 discloses evaluations of sensor-assisted multi-level codebook-based beamforming with trace-driven simulations using real mobility traces.

### SUMMARY

According to aspects of the present disclosure, there are provided a method and a network node according to the independent claims. Developments are set forth in the dependent claims.

Some embodiments advantageously provide methods and apparatuses for handling of sensor-assisted modes of wireless communication.

According to an aspect of the present disclosure, a method for a network node is provided. The network node supports communication at least with a wireless device (WD) and a sensor that is configured to provide visual information. The method includes transmitting a first signal to the WD. The first signal includes a request for the WD to transmit a report. The method further includes determining whether the network node has received the report from the WD within a predetermined period of time. If the network node has not received the report from the WD within the predetermined period of time, an alternate mode of communication with the WD is entered. The alternate mode of communication includes obtaining the visual information from the sensor, determining a fallback format for transmission based at least in part on the obtained visual information, and
transmitting a second signal to the WD using the fallback format.

In some embodiments, the method further includes determining a beam index based in part on the visual information from the sensor and determining a beam forming based on the determined beam index. The beam forming is determined to transmit the second signal to the WD further using the determined beam forming. In some other embodiments, the transmitted first signal includes a Radio Resource Control (RRC) message, the request is a Channel State Information (CSI) report request, and the report is a CSI report. In one embodiment, the alternate mode includes a User Plane Control (UPC) alternate mode. In another embodiment, the first signal to the WD is transmitted further using a Downlink Control Information (DCI) format, where the DCI format is a DCI 0_1 format. In some embodiment, the determined fallback format is a format that omits at least one communication feature in order for the network node to be able to maintain communication with the WD after entering the alternate mode, and the fallback format is determinable based at least in part on the obtained the visual information.

In some other embodiments, the determined fallback format includes at least one of a DCI 0_0 format for Physical Uplink Shared Channel (PUSCH) scheduling and a DCI 1_0 for Physical Downlink Shared Channel (PDSCH) scheduling. In one embodiment, the report is a P2 report, which is requested for network node beam refinement and tracking. In another embodiment the method further including adjusting at least a modulation coding scheme (MCS) for link adaptation (LA) after entering the alternate mode of communication, where the LA is one of an uplink (UL) LA and a downlink (DL) LA.

In some embodiments, the method further includes, after entering the alternate mode of communication, determining a current mode of link adaptation (LA) outer loop adjustment and selecting a mode of LA outer loop adjustment different from the current mode of LA outer loop adjustment. In some other embodiments, the method further includes freezing current UL and DL filters after entering the alternate mode of communication. In another embodiment, the method further includes receiving a success indicator signal from the WD and exiting the alternate mode of communication between the network node and the WD after receiving the success indicator signal from the WD.

According to another aspect of the present disclosure, a network node is provided. The network node supports communication at least with a wireless device (WD) and a sensor that is configured to provide visual information. The network node includes processing circuit that is configured to cause a transmission of a first signal to the WD. The first signal includes a request for the WD to transmit a report. The processing circuitry is further configured to determine whether the network node has received the report from the WD within a predetermined period of time. In addition, the processing circuitry is configured to, if the network node has not received the report from the WD within the predetermined period of time, enter an alternate mode of communication with the WD. The alternate mode of communication including obtaining the visual information from the sensor, determining a fallback format for transmission based at least in part on the obtained visual information, and causing a transmission of a second signal to the WD using the fallback format.

In some embodiments, the processing circuit is further configured to determine a beam index based in part on the visual information from the sensor and determine a beam forming based on the determined beam index. The beam forming is determined to transmit the second signal to the WD further using the determined beam forming. In some other embodiments, the transmitted first signal includes a Radio Resource Control (RRC) message, the request is a Channel State Information (CSI) report request, and the report is a CSI report. In one embodiment, the alternate mode includes a User Plane Control (UPC) alternate mode. In another embodiments, the first signal to the WD is transmitted further using a Downlink Control Information (DCI) format, the DCI format being a DCI 0_1 format. In some embodiments, the determined fallback format is a format that omits at least one communication feature in order for the network node to be able to maintain communication with the WD after entering the alternate mode, the fallback format being determinable based at least in part on the obtained the visual information.

In some other embodiments, the determined fallback format includes at least one of a DCI 0_0 format for Physical Uplink Shared Channel (PUSCH) scheduling and a DCI 1_0 for Physical Downlink Shared Channel (PDSCH) scheduling. In one embodiment, the report is a P2 report, the P2 report being requested for network node beam refinement and tracking. In another embodiment, the processing circuit is further configured to adjust at least a modulation coding scheme (MCS) for link adaptation (LA) after entering the alternate mode of communication, where the LA is one of an uplink (UL) LA and a downlink (DL) LA.

In some embodiments, the processing circuitry is further configured to, after entering the alternate mode of communication, determine a current mode of link adaptation (LA) outer loop adjustment and select a mode of LA outer loop adjustment different from the current mode of LA outer loop adjustment. In some other embodiments, the processing circuitry is further configured to freeze current UL and DL filters after entering the alternate mode of communication. In another embodiment, the processing circuitry being further configured to determine a success indicator signal has been received from the WD and exit the alternate mode of communication between the network node and the WD after the success indicator signal is determined to have been received from the WD.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a schematic diagram of an example network architecture illustrating a communication system according to the principles in the present disclosure;
FIG. 2 is a block diagram of a network node in communication with a wireless device over an at least partially wireless connection according to some embodiments of the present disclosure; and
FIG. 3 is a flowchart of an example method for handling at least a mode of communication based in part on information obtained from a sensor according to one embodiment of the present disclosure.

### DETAILED DESCRIPTION

In some embodiments, the network node performs UL/DL scheduling using DCI fallback formats, DCI 0_0 and DCI 1_0, rather than suspending UL/DL scheduling. Continuing scheduling with fallback formats allows to maintain predetermined UL/DL throughputs from a WD perspective, e.g., when the elapsed time for RRC Reconfiguration is less than a predetermined duration and/or when there is no beam loss due to WD mobility.

In some other embodiments, safe mode is handled by incorporating information, e.g., vision/visual information, obtained in part through a sensor, e.g., a camera, that is in communication with the network node and part of the network node or that may be in communication with the network node without being part of the network node. More particularly, UL/DL scheduling continues with a fallback DCI format during the safe mode. In cases of prolonged RRC reconfiguration, the information obtained from the sensor may be used for P2 tracking until receiving the first aperiodic CSI report for P2 tracking, e.g., after safe mode ends.

The safe mode handling described herein is effective at least for cases of prolonged RRC reconfiguration and allows UL/DL scheduling to continue, rather than being suspended. In addition, since BM may be based on information obtained from the sensor, WD throughput can be maintained to predetermined levels. In some embodiments, the amount of information available from a sensor or sensors, e.g., having line-of-sight information, increases when a corresponding cell size decreases. In some other embodiments, using the safe mode handling described herein allows to conserve resources that otherwise would be used in order to obtain the same information that the sensor provides or information that is similar to the information provided by the sensor.

Before describing in detail exemplary embodiments, it is noted that the embodiments reside primarily in combinations of apparatus components and processing steps related to vision-assisted safe mode handling in wireless communication networks. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. Also, the network node may include at least one sensor, configured to detect/sense at least a condition/parameter.

The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

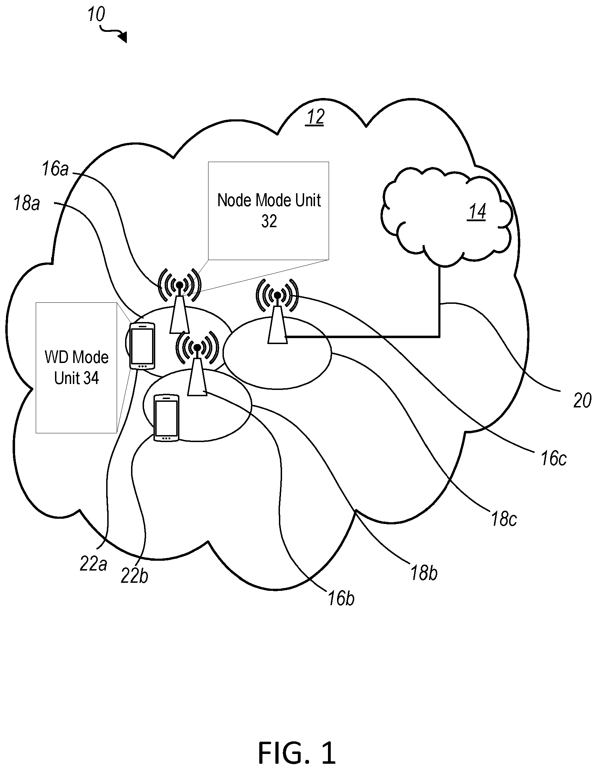

Referring now to the drawing figures, in which like elements are referred to by like reference numerals, there is shown in FIG. 1 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first WD 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN. In addition, it is contemplated that a network node 16 may be in simultaneous communication and/or configured to communicate with more than one WD 22 at the same time. Further, the communication system 10 may be configured so that any WD 22 may communicate with another WD 22 via the network node 16 or directly.

A network node 16 is configured to include a node mode unit 32 which is configured to provide a mode of communication that is used to communicate with at least with one WD based in part on information provided by a sensor as discussed in detail below. A wireless device 22 is configured to include a WD mode unit 34 which is configured to cause the WD 22 to communicate at least with the network node 16 using a mode of communication that is based in part on information provided by a sensor as discussed in detail below.

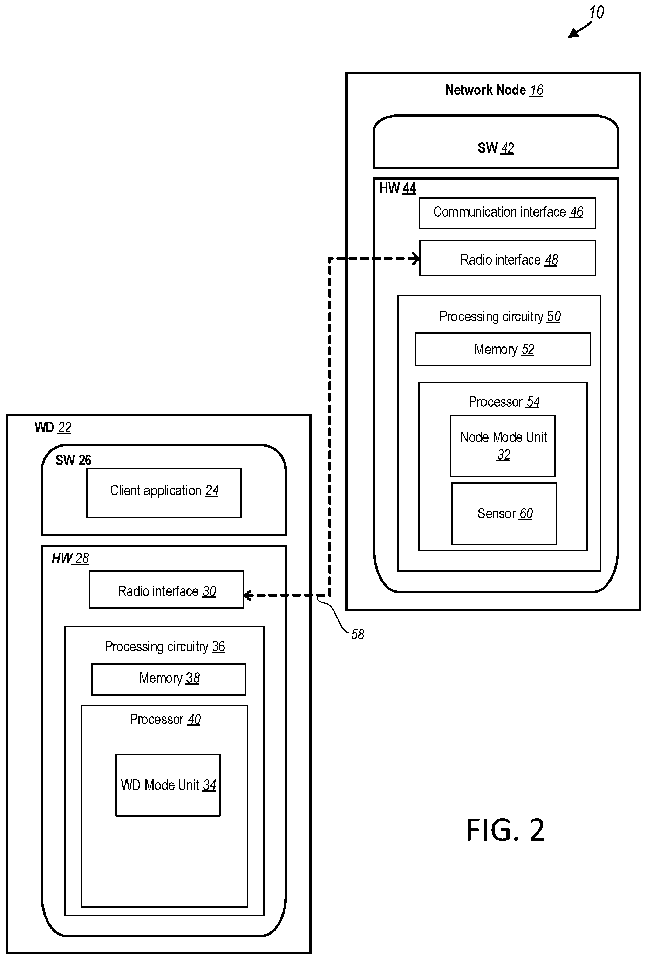

Example implementations, in accordance with an embodiment, of the WD 22 and network node 16 discussed in the preceding paragraphs will now be described with reference to FIG. 2.

The communication system 10 further includes a network node 16 provided in a communication system 10 and including hardware 44 enabling it to communicate with the WD 22. The hardware 44 may include a communication interface 46 for setting up and maintaining a wired or wireless connection with an interface of a different communication device of the communication system 10, as well as a radio interface 48 for setting up and maintaining at least a wireless connection 58 with a WD 22 located in a coverage area 18 served by the network node 16. The radio interface 48 may be formed as or may include, for example, one or more RF transmitters, one or more RF receivers, and/or one or more RF transceivers.

In the embodiment shown, the hardware 44 of the network node 16 further includes processing circuitry 50. The processing circuitry 50 may include a processor 54 and a memory 52. In particular, in addition to or instead of a processor, such as a central processing unit, and memory, the processing circuitry 50 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 54 may be configured to access (e.g., write to and/or read from) the memory 52, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Further, hardware 44 of the network node 16 may further include sensor 60. Sensor 60 may collectively refer to more than one sensor, such as sensors 60a, 60b, 60c, etc. In some embodiments, sensor 60 is part of the processing circuitry 50 and/or processor 54 but is not limited to being part of either one or both. In some other embodiments, sensor 60 is not within the network node 16 and may be at a location that is different from the location of the network node 16 and directly or indirectly in communication with the network node 16. Also, although sensor 60 is shown as being within processor 54, it is contemplated that sensor 60 may be implemented such that a portion of the sensor 60 is stored in a corresponding memory, such as memory 52, within the processing circuitry 50. In other words, sensor 60 may be implemented in hardware or in a combination of hardware and software within the processing circuitry 50. In some embodiments, sensor 60 may be at least one sensor of any one of the following sensors: vision sensors, imaging sensors, optical sensors, infrared sensors, color sensors, temperature sensors, radiation sensors, proximity sensors, pressure sensors, velocity sensors, flow sensors, position sensors, location sensors, photoelectric sensor, chemical sensors, humidity sensors, or any combination thereof. For example, sensor 60 may be a camera providing visual/optical information. Sensor 60 may be a type of sensor that provides information usable for P2 tracking, usable for beam forming, and/or usable in order to maintain communication with WD 22. However, sensor 60 is not limited to being any of the sensors described and may be any kind of sensor. Thus, sensor 60 is configured to sense any condition/parameter and provide the sensed condition/parameter and/or information associated with the sensed condition/parameter.

The network node 16 further has software 42 stored internally in, for example, memory 52, or stored in external memory (e.g., database, storage array, network storage device, etc.) accessible by the network node 16 via an external connection. The software 42 may be executable by the processing circuitry 50. The processing circuitry 50 may be configured to control any of the methods and/or processes described herein and/or to cause such methods, and/or processes to be performed, e.g., by network node 16. Processor 54 corresponds to one or more processors 54 for performing network node 16 functions described herein. The memory 52 is configured to store data, programmatic software code and/or other information described herein. In some embodiments, the software 42 may include instructions that, when executed by the processor 54 and/or processing circuitry 50, causes the processor 54 and/or processing circuitry 50 to perform the processes described herein with respect to network node 16. For example, processing circuitry 50 of the network node 16 may include node mode unit 32 configured to provide a mode of communication that is used to communicate with at least with one WD based in part on information provided by the sensor 60.

The communication system 10 further includes the WD 22 already referred to. The WD 22 may have hardware 28 that may include a radio interface 30 configured to set up and maintain a wireless connection 58 with a network node 16 serving a coverage area 18 in which the WD 22 is currently located. The radio interface 30 may be formed as or may include, for example, one or more RF transmitters, one or more RF receivers, and/or one or more RF transceivers.

The hardware 28 of the WD 22 further includes processing circuitry 36. The processing circuitry 36 may include a processor 40, memory 38. In particular, in addition to or instead of a processor, such as a central processing unit, and memory, the processing circuitry 36 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 40 may be configured to access (e.g., write to and/or read from) memory 38, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 26, which is stored in, for example, memory 38 at the WD 22, or stored in external memory (e.g., database, storage array, network storage device, etc.) accessible by the WD 22. The software 26 may be executable by the processing circuitry 36. The software 26 may include a client application 24. The client application 24 may interact with the user to generate the user data that it provides.

The processing circuitry 36 may be configured to control any of the methods and/or processes described herein and/or to cause such methods, and/or processes to be performed, e.g., by WD 22. The processor 40 corresponds to one or more processors 40 for performing WD 22 functions described herein. The WD 22 includes memory 38 that is configured to store data, programmatic software code and/or other information described herein. In some embodiments, the software 26 and/or the client application 24 may include instructions that, when executed by the processor 40 and/or processing circuitry 36, causes the processor 40 and/or processing circuitry 36 to perform the processes described herein with respect to WD 22. For example, the processing circuitry 36 of the wireless device 22 may include a WD mode unit 34 configured to cause the WD 22 to communicate at least with the network node 16 using a mode of communication that is based in part on information provided by sensor 60.

In some embodiments, the inner workings of the network node 16 and WD 22 may be as shown in FIG. 2 and independently, the surrounding network topology may be that of FIG. 1.

In some embodiments, any of the WDs 22 may be configured to, and/or comprises a radio interface 30 and/or processing circuitry 36 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 1 and 2 show various "units" such as node mode unit 32, and WD mode unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

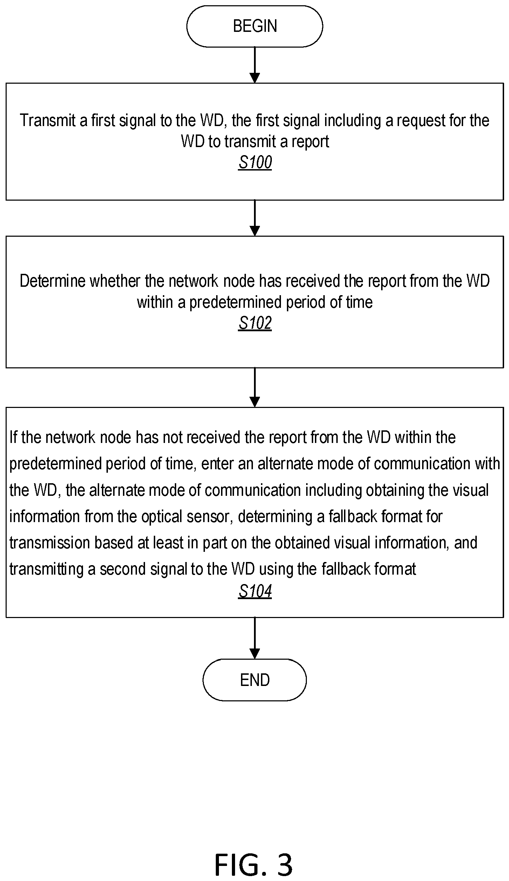

FIG. 3 is a flowchart of an example method in a network node 16 for handling at least a mode of communication based in part on information obtained from a sensor, e.g., providing an alternate-mode of communication at least with one WD 22 based in part on information provided by sensor 60. One or more Blocks and/or functions performed by network node 16 may be performed by one or more elements of network node 16 such as by node mode unit 32 in processing circuitry 50, processor 54, sensor 60, communication interface 46, radio interface 48, etc. The example method includes transmitting (Block 5100), such as via one or more of processing circuitry 50, processor 54, node mode unit 32, radio interface 48 and communication interface 46, a first signal to the WD 22, the first signal including a request for the WD 22 to transmit a report. The example method further includes determining (Block S102), such as via one or more of processing circuitry 50, processor 54, node mode unit 32, radio interface 48 and communication interface 46, whether the network node 16 has received the report from the WD 22 within a predetermined period of time. Further, the example method includes, if the network node 16 has not received the report from the WD 22 within the predetermined period of time, entering (Block S104), such as via one or more of processing circuitry 50, processor 54, node mode unit 32, sensor 60, radio interface 48 and communication interface 46, an alternate mode of communication with the WD 22. The alternate mode of communication includes obtaining the visual information from the sensor 60, determining a fallback format for transmission based at least in part on the obtained visual information, and transmitting a second signal to the WD 22 using the fallback format.

In some embodiments, the method further includes determining a beam index based in part on the visual information from the sensor 60 and determining a beam forming based on the determined beam index. The beam forming is determined to transmit the second signal to the WD 22 further using the determined beam forming. In some other embodiments, the transmitted first signal includes a Radio Resource Control (RRC) message, the request is a Channel State Information (CSI) report request, and the report is a CSI report. In one embodiment, the alternate mode includes a User Plane Control (UPC) alternate mode. In another embodiment, the first signal to the WD is transmitted further using a Downlink Control Information (DCI) format, where the DCI format is a DCI 0_1 format. In some embodiment, the determined fallback format is a format that omits at least one communication feature in order for the network node 16 to be able to maintain communication with the WD 22 after entering the alternate mode, and the fallback format is determinable based at least in part on the obtained the visual information.

In some other embodiments, the determined fallback format includes at least one of a DCI 0_0 format for Physical Uplink Shared Channel (PUSCH) scheduling and a DCI 1_0 for Physical Downlink Shared Channel (PDSCH) scheduling. In one embodiment, the report is a P2 report, which is requested for network node beam refinement and tracking. In another embodiment the method further including adjusting at least a modulation coding scheme (MCS) for link adaptation (LA) after entering the alternate mode of communication, where the LA is one of an uplink (UL) LA and a downlink (DL) LA.

In some embodiments, the method further includes, after entering the alternate mode of communication, determining a current mode of link adaptation (LA) outer loop adjustment and selecting a mode of LA outer loop adjustment different from the current mode of LA outer loop adjustment. In some other embodiments, the method further includes freezing current UL and DL filters after entering the alternate mode of communication. In another embodiment, the method further includes receiving a success indicator signal from the WD 22 and exiting the alternate mode of communication between the network node 16 and the WD 22 after receiving the success indicator signal from the WD 22.

Having described the general process flow of arrangements of the disclosure and having provided examples of hardware and software arrangements for implementing the processes and functions of the disclosure, the sections below provide details and examples of arrangements for vision-assisted safe mode handling in wireless communication networks, which may be implemented by the network node 16 and/or WD 22.

In some embodiments, UL/DL scheduling is handled based in part on when the UPC enters a mode of communication. Some nonlimiting examples of the mode of communication include a safe mode, a normal state, or an alternate mode of communication. However, the mode of communication is not limited to the safe mode, the normal state, or the alternate mode of operation and may be any mode of communication. In some embodiments, the alternate mode may be a safe mode. Thus, although discussion below refers to the "safe mode", it is understood that embodiments are not limited to "safe mode" and can be other alternate modes of communication.

The network node 16 may move into the alternate, e.g., safe mode, upon sending a modification signal, e.g., an RRC message, to the WD 22. Once the network node 16 is in safe mode, the network node 16 may perform any one of the following actions:
1- Employ a first DCI format, e.g., DCI 0_0, and a second DCI format, e.g., DCI 1_0, for PUSCH and PDSCH scheduling during the safe mode, respectively.
2- Use a third DCI format, e.g., DCI 0_1, with the original field for a first P2 report. If a second P2 report is not received and visual information from sensor 60 is not available, the network node 16 may use the first P2 report. The network node 16 may determine that the network node 16 has not received a P2 report by determining whether the P2 report has not been received on an expected time slot and/or within a predetermined time period. If the second P2 report is not received and visual information is available from sensor 60, the network node 16 may use a beam index obtained via visual information coming from sensor 60 and/or the first P2 report. If a second P2 report is received, e.g., within the predetermined period of time or on an expected time slot, and visual information is available from sensor 60, the network node 16 may use the second P2 report and/or the visual information and/or the first P2 report. As described above, sensor 60 may collectively refer to more than one sensor, such as sensors 60a, 60b, 60c, and sensor 60 may not necessarily be within the network node 16, i.e., at a location that is different from the location of the network node 16. Further, sensor 60 may be directly or indirectly in communication with the network node 16. In a nonlimiting example, visual information from sensor 60, such as 60a, 60b, and 60c, may be collected, e.g., through distributed radio remote heads, and/or stored at a network location that is different from the network location of network node 16. The collected visual information may be used at least by the network node 16 to determine a beam-index that can be selected from a predefined list of beams, e.g., through machine learning.
3- Reduce MCSs for UL/DL LA, e.g., use a conservative MCS mode to conserve resources.
4- Change a current mode of LA outer loop adjustment, e.g., change the current mode of UL/DL LA outer loop adjustment to a conservative LA outer loop adjustment mode.
5- Freeze UL/DL filters.

The network node 16, e.g., via the UPC protocol, may move into the normal state, after receiving a success indicator signal. When in the normal state, the network node 16 may perform any one of the following actions:
1- Restart the use of at least a non-fallback DCI format or continue the use of at least a fallback DCI format for data transmission.
2- Use non-fallback DCI 0_1 format for requesting aperiodic CSI reporting.
3- After the safe mode ends, request aperiodic CSI report for P2 tracking.
4- Stop reducing MCSs.
5- Change the current mode of LA outer loop adjustment, e.g., change the current mode of UL/DL LA outer loop adjustment to a normal LA outer loop adjustment mode.
6- Restart UL/DL filters.

In some embodiments, the network node 16 may move into or enter the alternate mode of communication. The alternate mode of communication may be a mode of communication that allows the network node 16 and the WD 22 to maintain communication without suspending UL/DL and/or by using information obtained at least from sensor 60. The alternate mode may be a mode of communication that is based on a User Plane Control (UPC) protocol. In some other embodiments, the alternate mode of communication is a mode of communication that is based in part on the safe mode and/or the normal state. In a nonlimiting example, the network node 16 may enter the alternate mode of communication with the WD 22 after entering safe mode, and the network node 16 may perform any of one the steps described above for each of the safe mode and the normal state. However, the network node 16 is not limited to entering the alternate mode of communication after entering the safe mode and may enter the alternate mode at any time. Further, the network node 16 is not limited to performing the steps described for each of the safe mode and the normal state and may perform other steps.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method for a network node (16) supporting communication at least with a wireless device, WD, (22) and a sensor (60) configured to provide visual information, the method comprising:
transmitting (S100) a first signal to the WD (22), the first signal including a request for the WD (22) to transmit a report;
determining (S102) whether the network node (16) has received the report from the WD (22) within a predetermined period of time; and
if the network node (16) has not received the report from the WD (22) within the predetermined period of time, entering (S104) an alternate mode of communication with the WD (22), the alternate mode of communication including:
obtaining the visual information from the sensor (60);
determining a fallback format for transmission based at least in part on the obtained visual information; and
transmitting a second signal to the WD (22) using the fallback format.

2. The method of Claim 1, the method further including:
determining a beam index based in part on the visual information from the sensor (60); and
determining a beam forming based on the determined beam index, the beam forming being determined to transmit the second signal to the WD (22) further using the determined beam forming.

3. The method of any one of Claims 1 and 2, wherein the transmitted first signal includes a Radio Resource Control, RRC, message, the request is a Channel State Information, CSI, report request, and the report is a CSI report.

4. The method of any one of Claims 1-3, wherein the alternate mode includes a User Plane Control, UPC, alternate mode; and/or
wherein the first signal to the WD (22) is transmitted further using a Downlink Control Information, DCI, format, the DCI format being a DCI 0_1 format.

5. The method of any one of the Claims 1-4, wherein the determined fallback format is a format that omits at least one communication feature in order for the network node (16) to be able to maintain communication with the WD (22) after entering the alternate mode, the fallback format being determinable based at least in part on the obtained the visual information; and/or
wherein the determined fallback format includes at least one of a DCI 0_0 format for Physical Uplink Shared Channel, PUSCH, scheduling and a DCI 1_0 for Physical Downlink Shared Channel, PDSCH, scheduling.

6. The method of any one of Claims 1-5, wherein the report is a P2 report, the P2 report being requested for network node (16) beam refinement and tracking.

7. The method of any one of Claims 1-6, the method further including:
adjusting at least a modulation coding scheme, MCS, for link adaptation, LA, after entering the alternate mode of communication, the LA being one of an uplink, UL, LA and a downlink, DL, LA; and/or
after entering the alternate mode of communication:
determining a current mode of link adaptation, LA, outer loop adjustment; and
selecting a mode of LA outer loop adjustment different from the current mode of LA outer loop adjustment.

8. The method of any one of Claims 1-7, the method further including:
i) freezing current UL and DL filters after entering the alternate mode of communication; and/or
ii) receiving a success indicator signal from the WD (22); and
exiting the alternate mode of communication between the network node (16) and the WD (22) after receiving the success indicator signal from the WD (22).

9. A network node (16) supporting communication at least with a wireless device, WD, (22) and a sensor (60) configured to provide visual information, the network node (16) comprising processing circuit (50) configured to:
cause a transmission of a first signal to the WD (22), the first signal including a request for the WD (22) to transmit a report;
determine whether the network node (16) has received the report from the WD (22) within a predetermined period of time; and
if the network node (16) has not received the report from the WD (22) within the predetermined period of time, enter an alternate mode of communication with the WD (22), the alternate mode of communication including:
obtaining the visual information from the sensor (60);
determining a fallback format for transmission based at least in part on the obtained visual information; and
causing a transmission of a second signal to the WD (22) using the fallback format.

10. The network node (16) of Claim 9, the processing circuit (50) being further configured to:
determine a beam index based in part on the visual information from the sensor (60); and
determine a beam forming based on the determined beam index, the beam forming being determined to transmit the second signal to the WD (22) further using the determined beam forming.

11. The network node (16) of any one of Claims 9 and 10, wherein the transmitted first signal includes a Radio Resource Control, RRC, message, the request is a Channel State Information, CSI, report request, and the report is a CSI report; and/or
wherein the alternate mode includes a User Plane Control, UPC, alternate mode.

12. The network node (16) of any one of Claims 9-11, wherein the first signal to the WD (22) is transmitted further using a Downlink Control Information, DCI, format, the DCI format being a DCI 0_1 format; and/or
wherein the determined fallback format is a format that omits at least one communication feature in order for the network node (16) to be able to maintain communication with the WD (22) after entering the alternate mode, the fallback format being determinable based at least in part on the obtained the visual information.

13. The network node (16) of any one of Claims 9-12, wherein the determined fallback format includes at least one of a DCI 0_0 format for Physical Uplink Shared Channel, PUSCH, scheduling and a DCI 1_0 for Physical Downlink Shared Channel, PDSCH, scheduling; and/or
wherein the report is a P2 report, the P2 report being requested for network node (16) beam refinement and tracking.

14. The network node (16) of any one of Claims 9-13, the processing circuit (50) being further configured to:
i) adjust at least a modulation coding scheme, MCS, for link adaptation, LA, after entering the alternate mode of communication, the LA being one of an uplink, UL, LA and a downlink, DL, LA; and/or
ii) after entering the alternate mode of communication:
determine a current mode of link adaptation, LA, outer loop adjustment; and
select a mode of LA outer loop adjustment different from the current mode of LA outer loop adjustment.

15. The network node (16) of any one of Claims 9-14, the processing circuitry (50) being further configured to:
i) freeze current UL and DL filters after entering the alternate mode of communication; and/or
ii) determine a success indicator signal has been received from the WD (22); and
exit the alternate mode of communication between the network node (16) and the WD (22) after the success indicator signal is determined to have been received from the WD (22).

## Patentansprüche

1. Verfahren für einen Netzwerkknoten (16), der die Kommunikation mindestens mit einer drahtlosen Vorrichtung, WD, (22) und einem Sensor (60) unterstützt, der konfiguriert ist, um visuelle Informationen bereitzustellen, das Verfahren umfassend:
Übertragen (S100) eines ersten Signals an die WD (22), wobei das erste Signal eine Anforderung an die WD (22) einschließt, um einen Bericht zu übertragen;
Bestimmen (S102), ob der Netzwerkknoten (16) den Bericht von der WD (22) innerhalb einer vorherbestimmten Zeitspanne empfangen hat; und
falls der Netzwerkknoten (16) den Bericht von der WD (22) nicht innerhalb der vorherbestimmten Zeitspanne empfangen hat, Eintreten (S104) in einen Ersatzkommunikationsmodus mit der WD (22), wobei der Ersatzkommunikationsmodus einschließt:
Erhalten der visuellen Informationen von dem Sensor (60);
Bestimmen eines Fallback-Formats für die Übertragung mindestens teilweise basierend auf den erhaltenen visuellen Informationen; und
Übertragen eines zweiten Signals an die WD (22) unter Verwendung des Fallback-Formats.

2. Das Verfahren nach Anspruch 1, wobei das Verfahren ferner einschließt:
Bestimmen eines Strahlindex teilweise basierend auf den visuellen Informationen von dem Sensor (60); und
Bestimmen einer Strahlformung basierend auf dem bestimmten Strahlindex, wobei die Strahlformung bestimmt wird, um das zweite Signal an die WD (22) unter weiterer Verwendung der bestimmten Strahlformung zu übertragen.

3. Verfahren nach einem der Ansprüche 1 und 2, wobei das übertragene erste Signal eine Radio-Resource-Control-Nachricht, RRC-Nachricht, einschließt, wobei die Anforderung eine Kanalzustandsinformationen-Berichtsanforderung, CSI-Berichtsanforderung, ist und der Bericht ein CSI-Bericht ist.

4. Verfahren nach einem der Ansprüche 1 bis 3, wobei der Ersatzmodus einen Benutzerebenensteuer-Ersatzmodus, UPC-Ersatzmodus, einschließt; und/oder
wobei das erste Signal an die WD (22) unter weiterer Verwendung eines Downlink-Steuerinformationen-Format, DCI-Format, übertragen wird, wobei das DCI-Format ein DCI 0_1-Format ist.

5. Verfahren nach einem der Ansprüche 1 bis 4, wobei das bestimmte Fallback-Format ein Format ist, das mindestens ein Kommunikationsmerkmal weglässt, damit der Netzwerkknoten (16) die Kommunikation mit der WD (22) nach dem Eintreten in den Ersatzmodus aufrechterhalten kann, wobei das Fallback-Format mindestens teilweise basierend auf den erhaltenen visuellen Informationen bestimmbar ist; und/oder
wobei das bestimmte Fallback-Format mindestens eines von einem DCI 0_0-Format für die Planung des gemeinsam genutzten physischen Uplink-Kanals, PUSCH, und ein DCI 1_0-Format für die Planung des gemeinsam genutzten physischen Downlink-Kanals, PDSCH, einschließt.

6. Verfahren nach einem der Ansprüche 1 bis 5, wobei der Bericht ein P2-Bericht ist, wobei der P2-Bericht für eine Strahlverfeinerung und -verfolgung des Netzwerkknotens (16) angefordert wird.

7. Verfahren nach einem der Ansprüche 1 bis 6, wobei das Verfahren ferner einschließt:
Anpassen von mindestens einem Modulationscodierungsschema, MCS, für eine Verbindungsadaption, LA, nach dem Eintreten in den Ersatzkommunikationsmodus, wobei die LA eine von einer Uplink, UL, LA oder einer Downlink, DL, LA ist; und/oder
nach dem Eintreten in den Ersatzkommunikationsmodus:
Bestimmen eines aktuellen Modus der Verbindungsadaptions-Außenschleifenanpassung, LA-Außenschleifenanpassung; und
Auswählen eines Modus für die LA-Außenschleifenanpassung, der sich von dem aktuellen Modus für die LA-Außenschleifenanpassung unterscheidet.

8. Verfahren nach einem der Ansprüche 1 bis 7, wobei das Verfahren ferner einschließt:
i) Einfrieren der aktuellen UL- und DL-Filter nach dem Eintreten in den Ersatzkommunikationsmodus; und/oder
ii) Empfangen eines Erfolgsanzeigesignals von der WD (22); und
Austreten aus dem Ersatzkommunikationsmodus zwischen dem Netzwerkknoten (16) und der WD (22) nach Empfangen des Erfolgsanzeigesignals von der WD (22).

9. Netzwerkknoten (16), der die Kommunikation mindestens mit einer drahtlosen Vorrichtung, WD, (22) und einem Sensor (60) unterstützt, der konfiguriert ist, um visuelle Informationen bereitzustellen, der Netzwerkknoten (16) umfassend eine Verarbeitungsschaltung (50), die konfiguriert ist zum:
Veranlassen einer Übertragung eines ersten Signals an die WD (22), wobei das erste Signal eine Anforderung an die WD (22) einschließt, um einen Bericht zu übertragen;
Bestimmen, ob der Netzwerkknoten (16) den Bericht von der WD (22) innerhalb einer vorherbestimmten Zeitspanne empfangen hat; und
falls der Netzwerkknoten (16) den Bericht von der WD (22) nicht innerhalb der vorherbestimmten Zeitspanne empfangen hat, Eintreten in einen Ersatzkommunikationsmodus mit der WD (22), wobei der Ersatzkommunikationsmodus einschließt:
Erhalten der visuellen Informationen von dem Sensor (60);
Bestimmen eines Fallback-Formats für die Übertragung mindestens teilweise basierend auf den erhaltenen visuellen Informationen; und
Veranlassen einer Übertragung eines zweiten Signals an die WD (22) unter Verwendung des Fallback-Formats.

10. Netzwerkknoten (16) nach Anspruch 9, wobei die Verarbeitungsschaltung (50) ferner konfiguriert ist zum:
Bestimmen eines Strahlindex, teilweise basierend auf den visuellen Informationen von dem Sensor (60); und
Bestimmen einer Strahlformung basierend auf dem bestimmten Strahlindex, wobei die Strahlformung dazu bestimmt ist, das zweite Signal an die WD (22) unter weiterer Verwendung der bestimmten Strahlformung zu übertragen.

11. Netzwerkknoten (16) nach einem der Ansprüche 9 und 10, wobei das übertragene erste Signal eine Radio-Resource-Control-Nachricht, RRC-Nachricht, einschließt, wobei die Anforderung eine Kanalzustandsinformationen-Berichtsanforderung, CSI-Berichtsanforderung, ist und der Bericht ein CSI-Bericht ist; und/oder
wobei der Ersatzmodus einen Benutzerebenensteuer-Ersatzmodus, UPC-Ersatzmodus, einschließt.

12. Netzwerkknoten (16) nach einem der Ansprüche 9 bis 11, wobei das erste Signal an die WD (22) unter weiterer Verwendung eines Downlink-Steuerinformationen-Format, DCI-Format, übertragen wird, wobei das DCI-Format ein DCI 0_1-Format ist; und/oder
wobei das bestimmte Fallback-Format ein Format ist, das mindestens ein Kommunikationsmerkmal weglässt, damit der Netzwerkknoten (16) die Kommunikation mit der WD (22) nach dem Eintreten in den Ersatzmodus aufrechterhalten kann, wobei das Fallback-Format mindestens teilweise basierend auf den erhaltenen visuellen Informationen bestimmbar ist.

13. Der Netzwerkknoten (16) nacheinem der Ansprüche 9 bis 12, wobei das bestimmte Fallback-Format mindestens eines von einem DCI 0_0-Format für die Planung des gemeinsam genutzten physischen Uplink-Kanals, PUSCH, und ein DCI 1_0-Format für die Planung des gemeinsam genutzten physischen Downlink-Kanals, PDSCH, einschließt; und/oder
wobei der Bericht ein P2-Bericht ist, wobei der P2-Bericht für eine Strahlverfeinerung und -verfolgung des Netzwerkknotens (16) angefordert wird.

14. Der Netzwerkknoten (16) nach einem der Ansprüche 9 bis 13, wobei die Verarbeitungsschaltung (50) ferner konfiguriert ist zum:
i) Anpassen von mindestens einem Modulationscodierungsschema, MCS, für eine Verbindungsadaption, LA, nach dem Eintreten in den Ersatzkommunikationsmodus, wobei die LA eine von einer Uplink, UL, LA oder einer Downlink, DL, LA ist; und/oder
ii) nach dem Eintreten in den Ersatzkommunikationsmodus:
Bestimmen eines aktuellen Modus der Verbindungsadaptions-Außenschleifenanpassung, LA-Außenschleifenanpassung; und
Auswählen eines Modus für die LA-Außenschleifenanpassung, der sich von dem aktuellen Modus für die LA-Außenschleifenanpassung unterscheidet.

15. Netzwerkknoten (16) nach einem der Ansprüche 9 bis 14, wobei die Verarbeitungsschaltung (50) ferner konfiguriert ist zum:
i) Einfrieren der aktuellen UL- und DL-Filter nach dem Eintreten in den Ersatzkommunikationsmodus; und/oder
ii) Bestimmen, dass ein Erfolgsanzeigesignal von der WD (22) empfangen wurde; und
Austreten aus dem Ersatzkommunikationsmodus zwischen dem Netzwerkknoten (16) und der WD (22) nachdem bestimmt wurde, dass das Erfolgsanzeigesignal von der WD (22) empfangen wurde.

## Revendications

1. Procédé pour un noeud de réseau (16) prenant en charge une communication au moins avec un dispositif sans fil, WD, (22) et un capteur (60) configuré pour fournir des informations visuelles, le procédé comprenant :
la transmission (S100) d'un premier signal au WD (22), le premier signal comportant une demande de transmission d'un rapport par le WD (22) ;
le fait de déterminer (S102) si le noeud de réseau (16) a reçu le rapport en provenance du WD (22) dans une période de temps prédéterminée ; et
si le noeud de réseau (16) n'a pas reçu le rapport en provenance du WD (22) dans la période de temps prédéterminée, l'entrée (S104) dans un mode de communication alternatif avec le WD (22), le mode de communication alternatif comportant :
l'obtention des informations visuelles à partir du capteur (60) ;
la détermination d'un format de secours pour une transmission sur la base, au moins en partie, des informations visuelles obtenues ; et
la transmission d'un second signal au WD (22) à l'aide du format de secours.

2. Procédé selon la revendication 1, le procédé comportant en outre :
la détermination d'un indice de faisceau sur la base en partie des informations visuelles fournies par le capteur (60) ; et
la détermination d'une formation de faisceau sur la base de l'indice de faisceau déterminé, la formation de faisceau étant déterminée pour transmettre le second signal au WD (22) à l'aide en outre de la formation de faisceau déterminée.

3. Procédé selon l'une quelconque des revendications 1 et 2, dans lequel le premier signal transmis comporte un message de commande des ressources radio, RRC, la demande est une demande de rapport d'informations d'état du canal, CSI, et le rapport est un rapport CSI.

4. Procédé selon l'une quelconque des revendications 1 à 3, dans lequel le mode alternatif comporte un mode alternatif de commande du plan utilisateur (UPC) ; et/ou
dans lequel le premier signal au WD (22) est transmis à l'aide en outre d'un format d'informationz de commande de liaison descendante, DCI, le format DCI étant un format DCI 0_1.

5. Procédé selon l'une quelconque des revendications 1 à 4, dans lequel le format de secours déterminé est un format qui omet au moins une fonction de communication afin que le noeud de réseau (16) puisse maintenir la communication avec le WD (22) après l'entrée dans le mode alternatif, le format de secours pouvant être déterminé, au moins en partie, sur la base des informations visuelles obtenues ; et/ou
dans lequel le format de secours déterminé comporte au moins l'un parmi un format DCI 0_0 pour une programmation de canal physique partagé de liaison montante, PUSCH, et un format DCI 1_0 pour une programmation de canal physique partagé de liaison descendante, PDSCH.

6. Procédé selon l'une quelconque des revendications 1 à 5, dans lequel le rapport est un rapport P2, le rapport P2 étant demandé pour un affinement et un suivi de faisceau du noeud de réseau (16).

7. Procédé selon l'une quelconque des revendications 1 à 6, le procédé comportant en outre :
l'ajustement d'au moins un schéma de modulation et de codage, MCS, pour une adaptation de liaison, LA, après l'entrée dans le mode de communication alternatif, la LA étant l'une parmi une LA de liaison montante, UL, et une LA de liaison descendante, DL ; et/ou
après l'entrée dans le mode de communication alternatif :
la détermination d'un mode actuel d'ajustement de boucle extérieure d'adaptation de liaison, LA ; et
la sélection d'un mode d'ajustement de boucle extérieure LA différent du mode actuel d'ajustement de boucle extérieure LA.

8. Procédé selon l'une quelconque des revendications 1 à 7, le procédé comportant en outre :
i) le gel de filtres UL et DL actuels après l'entrée dans le mode de communication alternatif ; et/ou
ii) la réception d'un signal indicateur de succès en provenance du WD (22) ; et
le fait de quitter le mode de communication alternatif entre le noeud de réseau (16) et le WD (22) après avoir reçu le signal indicateur de succès en provenance du WD (22).

9. Noeud de réseau (16) prenant en charge la communication au moins avec un dispositif sans fil, WD, (22) et un capteur (60) configuré pour fournir des informations visuelles, le noeud de réseau (16) comprenant un circuit de traitement (50) configuré pour :
provoquer la transmission d'un premier signal au WD (22), le premier signal comportant une demande de transmission d'un rapport par le WD (22) ;
déterminer si le noeud de réseau (16) a reçu le rapport en provenance du WD (22) dans une période de temps prédéterminée ; et
si le noeud de réseau (16) n'a pas reçu le rapport en provenance du WD (22) dans la période de temps prédéterminée, l'entrée dans un mode de communication alternatif avec le WD (22), le mode de communication alternatif comportant :
l'obtention des informations visuelles à partir du capteur (60) ;
la détermination d'un format de secours pour une transmission sur la base, au moins en partie, des informations visuelles obtenues ; et
le fait de provoquer la transmission d'un second signal au WD (22) à l'aide du format de secours.

10. Noeud de réseau (16) selon la revendication 9, le circuit de traitement (50) étant en outre configuré pour :
déterminer un indice de faisceau sur la base en partie des informations visuelles fournies par le capteur (60) ; et
déterminer une formation de faisceau sur la base de l'indice de faisceau déterminé, la formation de faisceau étant déterminée pour transmettre le second signal au WD (22) à l'aide en outre de la formation de faisceau déterminée.

11. Noeud de réseau (16) selon l'une quelconque des revendications 9 et 10, dans lequel le premier signal transmis comporte un message de commande des ressources radio, RRC, la demande est une demande de rapport d'informations d'état du canal, CSI, et le rapport est un rapport CSI ; et/ou
dans lequel le mode alternatif comporte un mode alternatif de commande du plan utilisateur, UPC.

12. Noeud de réseau (16) selon l'une quelconque des revendications 9 à 11, dans lequel le premier signal au WD (22) est transmis à l'aide en outre d'un format d'informations de commande de liaison descendante, DCI, le format DCI étant un format DCI 0_1. et/ou
dans lequel le format de secours déterminé est un format qui omet au moins une fonction de communication afin que le noeud de réseau (16) puisse maintenir la communication avec le WD (22) après l'entrée dans le mode alternatif, le format de secours pouvant être déterminé, au moins en partie, sur la base des informations visuelles obtenues.

13. Noeud de réseau (16) selon l'une quelconque des revendications 9 à 12, dans lequel le format de secours déterminé comporte au moins l'un parmi un format DCI 0_0 pour une programmation de canal physique partagé de liaison montante, PUSCH, et un format DCI 1_0 pour une programmation de canal physique partagé de liaison descendante, PDSCH. et/ou
dans lequel le rapport est un rapport P2, le rapport P2 étant demandé pour un affinement et un suivi de faisceau du noeud de réseau (16).

14. Noeud de réseau (16) selon l'une quelconque des revendications 9 à 13, le circuit de traitement (50) étant en outre configuré pour :
i) ajuster au moins un schéma de modulation et de codage, MCS, pour une adaptation de liaison, LA, après l'entrée dans le mode de communication alternatif, la LA étant l'une parmi une LA de liaison montante, UL, et une LA de liaison descendante, DL ; et/ou
ii) après l'entrée dans le mode de communication alternatif :
déterminer un mode actuel d'ajustement de boucle extérieure d'adaptation de liaison, LA ; et
sélectionner un mode d'ajustement de boucle extérieure LA différent du mode actuel d'ajustement de boucle extérieure LA.

15. Noeud de réseau (16) selon l'une quelconque des revendications 9 à 14, le circuit de traitement (50) étant en outre configuré pour :
i) geler des filtres UL et DL actuels après l'entrée dans le mode de communication alternatif ; et/ou
ii) déterminer qu'un signal indicateur de succès a été reçu en provenance du WD (22) ; et
quitter le mode de communication alternatif entre le noeud de réseau (16) et le WD (22) après qu'il a été déterminé que le signal indicateur de succès a été reçu en provenance du WD (22).
